# EUROPÄISCHE PATENTSCHRIFT

(11) **EP 3 996 973 B1**
(45) Veröffentlichungstag und Bekanntmachung des Hinweises auf die Patenterteilung: **26.04.2023**
(21) Anmeldenummer: 20737164.2
(22) Anmeldetag: 07.07.2020
(51) Int. Cl.: B62D 5/04, F16C 25/06, F16C 25/08, F16H 55/24

(54) **ELEKTROMECHANISCHE SERVOLENKUNG MIT SCHWENKPENDEL-LAGERANORDNUNG**
ELECTROMECHANICAL POWER STEERING SYSTEM HAVING A PIVOT-PENDULUM BEARING ASSEMBLY
DIRECTION ASSISTÉE ÉLECTROMÉCANIQUE DOTÉE D'UN AGENCEMENT DE PALIER À PENDULE OSCILLANT

(30) Priorität: 10.07.2019 DE 102019118673
(43) Veröffentlichungstag der Anmeldung: 18.05.2022
(73) Patentinhaber: thyssenkrupp Presta AG, 9492 Eschen (LI); thyssenkrupp AG, 45143 Essen (DE)
(72) Erfinder: MÖLLER, Dirk, 9466 Sennwald (CH)
(74) Vertreter: thyssenkrupp Intellectual Property GmbH
(86) Internationale Anmeldenummer: PCT/EP2020/069047
(87) Internationale Veröffentlichungsnummer: WO 2021/005023

(56) Entgegenhaltungen:
- EP-A1- 1 007 398
- WO-A1-2019/025481
- KR-A- 20150 028 887

## Beschreibung

Die vorliegende Erfindung betrifft eine elektromechanische Servolenkung mit den Merkmalen des Oberbegriffs des Anspruchs 1.

In elektromechanischen Servolenkungen wird über einen Elektromotor ein Drehmoment erzeugt, das auf ein Getriebe übertragen und dort dem vom Fahrer gestellten Lenkmoment überlagert wird.

Eine gattungsgemäße elektromechanische Servolenkung weist einen elektrischen Servomotor auf, der eine Schneckenwelle antreibt, die mit einem auf einer Lenkwelle angeordneten Schneckenrad kämmt, wobei das Schneckenrad mit einer Eingangswelle eines Lenkgetriebes in Wirkverbindung steht und wobei die Schneckenwelle und die Lenkwelle in einem gemeinsamen Getriebegehäuse drehbar gelagert sind.

Die Lagerung eines Schneckengetriebes sollte möglichst spielfrei sein um Akustikprobleme wie Umlenkklopfen oder Klappern zu vermeiden. Gleichzeitig muss aber ein Spiel gewährleistet werden können, um Toleranzen und Umwelteinflüsse wie beispielsweise Änderungen der Feuchtigkeit, Temperatur usw. ausgleichen zu können. Umgekehrt darf aber auch keine zu große Vorspannkraft auf die Verzahnung aufgebracht werden, da sonst das

Durchdrehmoment und damit einhergehend der Verschleiß zu groß werden. Durch die Winkel in der Verzahnung der Schneckenwelle und des Schneckenrades als auch durch die Lagerung der Schnecke ergeben sich asymmetrische Lasten auf die Lager der Schneckenwelle. Diese bewirken mit der Zeit einen Verschleiß der Bauteile, wodurch sich das Spiel in der Verzahnung zunehmend erhöht. Es hat sich herausgestellt, dass das Einstellen des Spiels bei Montage auf Null nicht ausreichend ist. Durch die Zunahme des Spiels der Verzahnung kommt es zu Akustikproblemen.

Die Offenlegungsschrift DE 10 2014 110 306 A1 oder die EP 1 007 398 A1 offenbaren eine Schneckenwelle, die an ihrem motorfernen Ende in einem Lager drehbar gelagert ist, welches in einer Halterung aufgenommen ist, in der ein Lagerring, der einen Außenteil des Lagers bildet, drehfest angebracht ist. Die Halterung ist derart verlagerbar in dem Schneckengetriebe angebracht, dass der Lagerring in Richtung gegen die Verzahnung des Schneckenrads bewegbar ist, wodurch die Schneckenwelle in einen spielfreien Verzahnungseingriff mit dem Schneckenrad vorgespannt werden kann. Als Vorspannelement kann beispielsweise eine Feder vorgesehen sein, welche an der Halterung angreift und die Schneckenwelle elastisch spielfrei gegen die Verzahnung des Schneckenrads andrückt. Weiterhin ist die Halterung über einen eine Schwenkachse ausbildenden Stift in dem Getriebegehäuse schwenkbar gelagert.

Es ist Aufgabe der vorliegenden Erfindung eine elektromechanische Servolenkung mit einem Schraubradgetriebe, insbesondere einem Schneckengetriebe, anzugeben, bei dem Geräusche und Spiel effektiv und langfristig reduziert werden können.

Diese Aufgabe wird von einer elektromechanischen Servolenkung mit den Merkmalen des Anspruchs 1 gelöst. Weitere vorteilhafte Ausführungen sind den Unteransprüchen zu entnehmen.

Demnach ist eine elektromechanische Servolenkung mit einem elektrischen Servomotor mit einer Motorwelle, der eine mit einem Schraubrad kämmende Welle antreibt, vorgesehen, wobei die Welle in einem Getriebegehäuse angeordnet und in einer Lageranordnung aufweisend ein Wälzlager um eine Rotationsachse drehbar gelagert ist, wobei eine Vorspanneinrichtung umfasst ist, die ein bewegliches Lagerelement der Lageranordnung federelastisch gegen das Getriebegehäuse zum Einstellen des Spiels des Eingriffs zwischen Schraubrad und Welle vorspannt, wobei das Getriebegehäuse einen Gehäuseabschnitt mit einer ersten Anlagefläche und einer zweiten Anlagefläche aufweist, wobei die Lageranordnung einen Lagerträger für das Wälzlager aufweist, der das bewegliche Lagerelement bildet und der einen sich von einem Grundkörper des Lagerträgers erstreckenden Hebelarm mit einem freien Ende aufweist, welches am Getriebegehäuse an der zweiten Anlagefläche in einem zweiten Kontaktbereich anliegt. Der Lagerträger weist weiterhin an seinem Grundkörper einen Exzenternocken auf, der an der ersten Anlagefläche am Gehäuse in einem ersten Kontaktbereich anliegt. Die Normalen der ersten Anlagefläche und der zweiten Anlagefläche können in einer oder mehr Raumrichtungen einen Vorzeichenwechsel aufweisen. Es ist auch denkbar und möglich, dass die beiden Anlageflächen als Anlagepunkte ausgebildet sind. Der Lagerträger steht damit bevorzugt ausschließlich über die Anlageflächen in Kontakt mit dem Gehäuse. Die Lageranordnung kann am motornahen Ende und vorzugsweise am motorfernen Ende der Welle angeordnet sein.

Durch die asymmetrische Zweipunktabstützung des Lagerträgers am Getriebegehäuse ist die Lageranordnung selbst in allen Lastsituationen spielfrei, so dass Geräusche wirksam reduziert werden können. Der Lagerträger ist vorzugsweise einstückig aus einem Werkstück, beispielsweise aus einem Kunststoff-Spritzgussteil, ausgebildet.

Vorzugsweise ist der die erste und zweite Anlagefläche bildende Teil des Getriebegehäuses keilförmig mit ebenen Flächen ausgebildet. Dieser Teil kann beweglich ausgebildet sein, um ein Sperren der Bewegung der Welle zu verhindern.

Es ist vorteilhaft, wenn der erste und zweite Kontaktbereich in einer gemeinsamen Ebene senkrecht zur Rotationsachse liegen.

Der Hebelarm weist bevorzugt an seinem freien Ende einen in Längsrichtung erstreckenden Vorsprung auf, der sich am Getriebegehäuse federelastisch abstützt und der an der zweiten Anlagefläche des Gehäuseteils anliegt.

In einer vorteilhaften Ausführungsform ist zwischen dem Vorsprung und dem Grundkörper des Lagerträgers ein freier Raum ausgebildet, in dem der die erste und zweite Anlagefläche bildende Teil des Getriebegehäuses aufgenommen ist.

Das Wälzlager ist bevorzugt von dem Grundkörper des Lagerträgers konzentrisch umgeben und der Lagerträger weist in einer zentralen Öffnung des Grundkörpers einen Sitz für das Wälzlager auf, der durch einen Absatz in der Öffnung ausgebildet ist.

Es ist vorteilhafterweise vorgesehen, dass auf das freie Ende des Hebelarms ein im Gehäuse gehaltenes Federelement zur federelastischen Vorspannung der Welle im Gehäuse drückt. Bevorzugt ist ein starrer Anschlag, beispielsweise eine Anlagefläche des Gehäuses oder ein eingepresster Stift vorgesehen, welcher mit dem vorgespannten Federelement zusammenwirkt. Es ist auch denkbar und möglich, dass die federelastische Vorspannung der Welle im Gehäuse mittels eines federvorgespannten Stifts realisiert wird. Der Vorsprung des Hebelarms stützt sich vorzugsweise mittels des Stifts an dem Getriebegehäuse ab.

Um eine gute Einstellmöglichkeit zu gewährleisten erstreckt sich der Exzenternocken bevorzugt über einen Kreissektor in einem Bereich zwischen 10° und 100° zur Rotationsachse der Welle.

Der Exzenternocken weist vorzugsweise eine bauchige Erhebung auf, die sich in Umfangsrichtung asymmetrisch erstreckt und in Längsrichtung gleichbleibend oder besonders vorteilhaft konvex oder gewölbt oder gekrümmt ist, um Toleranzen auszugleichen, und deren Radius der Krümmung im Querschnitt kleiner oder grösser als der Radius des Lagersitzes ist. Der Radius der Krümmung wird dann kleiner gewählt, wenn die Position des Kontaktpunktes kontrollieret werden soll, und grösser, um den Kontaktdruck zu minimieren. Die Längsrichtung wird durch die Richtung der Rotationsachse der Welle definiert.

Der Exzenternocken ist bevorzugt derart ausgeformt, dass bei Bewegung des Lageraußenrings des Wälzlagers um die Rotationsachse sich zur Einstellung des Spiels des Eingriffs zwischen Schraubrad und Welle der Lageraußenring von dem Gehäuseabschnitt (der ersten Anlagefläche) weg oder zu diesem hin bewegt.

Um eine Langlebigkeit der Lageranordnung zu gewährleisten, weist die erste und/oder zweite Anlagefläche des Getriebegehäuses vorzugsweise eine höhere Steifigkeit als der Lagerträger auf.

Um die asymmetrischen Kräfte aufnehmen zu können, beträgt der Winkelabstand zwischen dem ersten Kontaktbereich und dem zweiten Kontaktbereich in Umfangsrichtung zur Rotationsachse vorzugsweise zwischen 20° und 50°, und besonders bevorzugt zwischen 30° und 40°.

In einer Ausführungsform ist das Schraubrad ein Schneckenrad und die Welle eine Schneckenwelle.

Nachfolgend wird ein Ausführungsbeispiel der vorliegenden Erfindung anhand der Zeichnungen beschrieben. Gleiche Bauteile oder Bauteile mit gleichen Funktionen tragen gleiche Bezugszeichen. Es zeigen:
- Figur 1:: eine räumliche Darstellung eines Getriebes einer elektromechanischen Servolenkung;
- Figur 2:: eine weitere räumliche Darstellung des in Figur 1 gezeigten Getriebes;
- Figur 3:: eine räumliche Darstellung des Eingriffs zwischen Schneckenrad und Schneckenwelle des Getriebes;
- Figur 4:: einen Querschnitt durch die Schneckenwelle auf Höhe eines Lagers,
- Figur 5:: eine räumliche Ansicht eines Bauteils des Lagers, sowie
- Figur 6:: eine schematische Darstellung der Funktionsweise des Lagers.

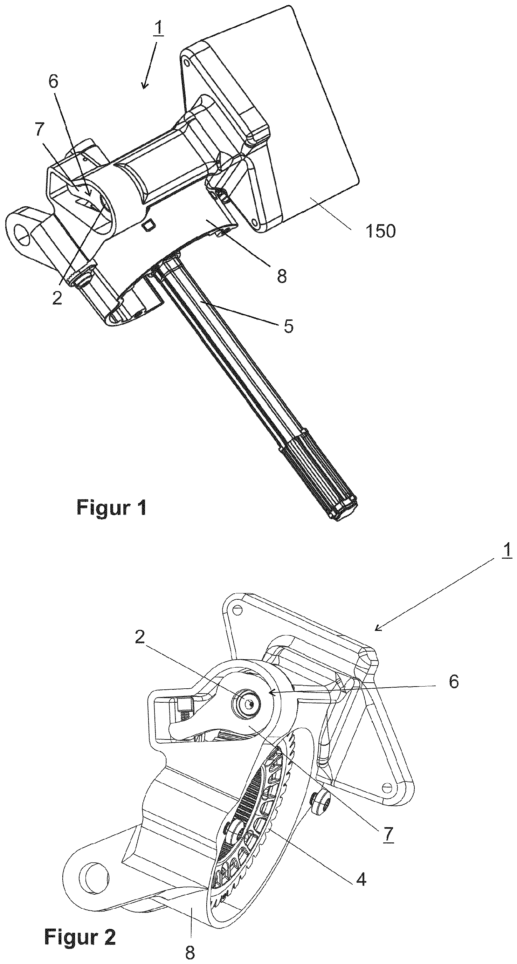

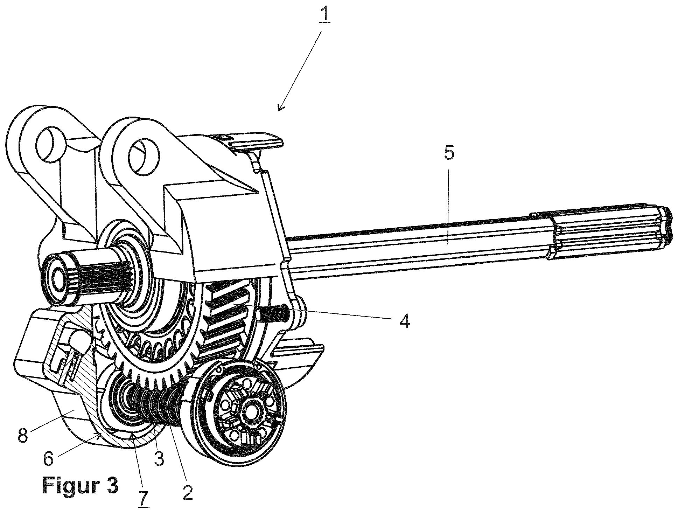

In den Figuren 1 bis 3 ist ein Getriebe 1 einer elektromechanischen Servolenkung eines Kraftfahrzeuges dargestellt. Die elektromechanische Servolenkung ist vorgesehen, um dem Fahrer bei einer Lenkbewegung zu unterstützen. Die elektromechanische Servolenkung weist neben dem Getriebe einen Elektromotor oder Servomotor 150 auf. Die Servoeinheit kann als Überlagerungslenkung an einer Lenksäule oder als Hilfskraftunterstützungseinrichtung an einem Ritzel oder einer Zahnstange angeordnet sein.

Der Servomotor treibt eine Schneckenwelle 2 an, die mit ihrer Schnecke 3 in Eingriff mit einem Schneckenrad 4 steht, dass mit der unteren Lenkwelle 5 oder dem Ritzel drehfest verbunden ist. Bei einem Betrieb des Elektromotors 150 wird die Schneckenwelle 2 angetrieben und die Schnecke 3 und das Schneckenrad 4 drehen sich entsprechend um eine Drehunterstützung für die untere Lenkwelle 5 bereitzustellen oder ein Unterstützungsmoment unmittelbar in das Ritzel einzuleiten.

Die Schneckenwelle 2 ist an ihrem freien Ende 6 in einer Lageranordnung 7 in dem das Getriebe umgebenden Getriebegehäuse 8 gelagert.

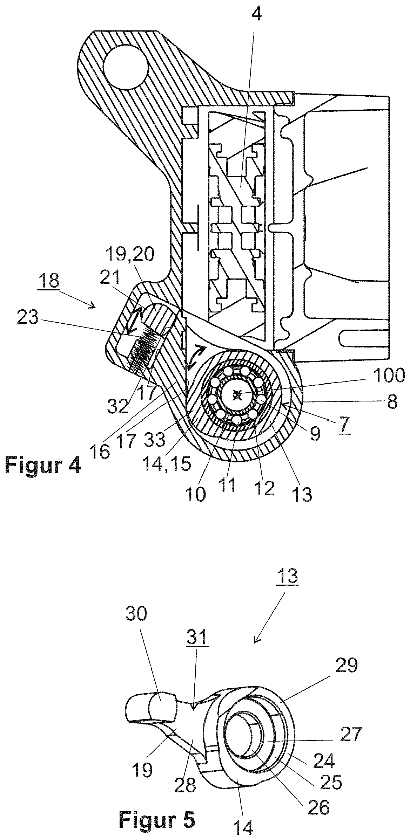

Die Lageranordnung 7 ist im Detail in Figur 4 dargestellt. Sie weist ein Wälzlager 9 auf, welches als Kugellager ausgebildet ist und geringfügige Axialbewegungen und Änderungen der Drehachse der Schneckenwelle 2 gegenüber dem Getriebegehäuse 8 zulässt. Das Wälzlager 9 weist einen Innenring 10, Wälzkörper 11 und einem Außenring 12 auf. Die Wälzkörper 11 laufen in Rillen zwischen dem Innenring 10 und dem Außenring 12. Der Außenring 12 ist in einem Lagersitz eines Lagerträgers 13 aufgenommen. Der Lagerträger 13 umgibt den Außenträger umfangseitig. Der Lagerträger 13 weist einen Exzenternocken 14 auf. Der Exzenternocken 14 ist auf der Umfangsfläche des Lagerträgers 13 ausgebildet und weist eine bauchige Erhebung 15 auf, die sich in Umfangsrichtung asymmetrisch erstreckt und in Längsrichtung gleichbleibend ist und deren Radius der Krümmung im Querschnitt kleiner oder grösser als der Radius des Lagersitzes ist. Der Exzenternocken 14 erstreckt sich über einen Kreissektor in einem Bereich zwischen 20° und 100° zur Rotationsachse 100 der Schneckenwelle 2. Der Exzenternocken 14 stützt sich mit seiner Umfangsfläche an einem Gehäuseabschnitt 16 ab. Dieser Gehäuseabschnitt 16 ist bevorzugt in der Form eines Keils gebildet und weist eine plane Ebene 17 auf, an der sich der Exzenternocken 14 auf- und abrollen oder entlanggleiten kann, letzteres insbesondere dann, wenn der Exzenternocken einen gleitenden Auflagepunkt bildet. Bei Bewegung des Lageraußenrings 12 um die Rotationsachse 100, schematisch dargestellt durch die Pfeile, bewegt sich der Lageraußenring 12 von dem Gehäuseabschnitt 16 weg bzw. zu diesem hin, so erhöht oder verringert sich das Spiel des Eingriffs zwischen Schneckenrad 4 und Schneckenwelle 2 je nach Drehrichtung. Besonders vorteilhaft ist es aber, wenn sich keine Bewegung des Lageraußenrings 12 oder nur eine geringe tolerierbare Bewegung einstellt, welche die Distanz beider Anlageflächen 32, 33 erhöht. Der Gehäuseabschnitt 16 weist bevorzugt eine höhere Steifigkeit auf als die des Exzenternockens 14, damit das Gehäuse 8 nicht durch Abrollen des Exzenternockens 14 auf der Ebene 17 beschädigt wird.

Der Lagerträger 13 weist weiterhin eine Vorspanneinrichtung 18 aufweisend einen Hebelarm 19 auf. Der Hebelarm 19 ist als Arm 20 mit einem freien Ende 21 ausgebildet. Er erstreckt sich von der Umfangsfläche des Lagerträgers 13 in Radialrichtung zur Rotationsachse 100. Der Lagerträger 13 ist an dem freien Ende 21 des Hebelarms 19 ebenfalls am Getriebegehäuse 8 abgestützt. Dazu drückt auf das freie Ende 21 ein im Gehäuse 8 gehaltener federvorgespannter Stift 22. Die Lage der Schneckenwelle 2 ist in Bezug auf das Schneckenrad 4 mittels der Vorspanneinrichtung 18 einstellbar. Der Exzenternocken 14 gleitet an der Gehäuseinnenwand des Getriebegehäuses 8 in Abhängigkeit der Krafteinwirkung durch die Feder 23 der Vorspanneinrichtung 18 auf den Stift 22 auf oder ab.

Durch die Zweipunktabstützung des Lagerträgers 13 am Getriebegehäuse 8 ist die Lageranordnung 7 selbst in allen Lastsituationen spielfrei, so dass Geräusche wirksam reduziert werden können.

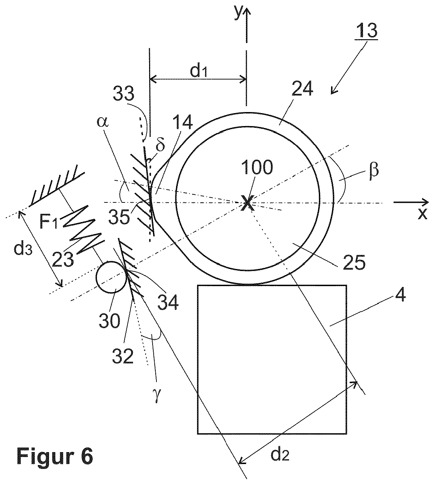

Die Figuren 5 und 6 zeigen die Einzelheiten des Lagerträgers 13. Der Lagerträger 13 weist einen im Wesentlichen zylindrischen Grundkörper 24 auf, der von einer kreisrunden Öffnung 25 durchsetzt ist, in der auf der Innenseite ein umlaufender Absatz 26 vorgesehen ist, der eine ringförmige Anlagefläche 27 in Längsrichtung als Sitz für das Wälzlager ausbildet. Der Exzenternocken 14 ist an der Außenseite des Grundkörpers 24 angeordnet und erstreckt sich über die gesamte Höhe des Lagerträgers 13 in Längsrichtung. Zu dem Exzenternocken 14 in Umfangsrichtung versetzt ist der Hebelarm 19, ebenfalls an der Außenseite des Grundkörpers 24, angeordnet. Der Hebelarm 19 erstreckt sich in Längsrichtung nur über einen Teil der Höhe des Grundkörpers 24. Zwischen einer Oberseite 28 des Hebelarms 19 und einer parallel dazu liegenden Stirnseite 29 des Grundkörpers 24 ist ein Abstand vorgesehen. Der Hebelarm 19 weist an seinem freien Ende 21 einen Vorsprung 30 auf. Der Vorsprung 30 erstreckt sich in Längsrichtung von der Oberseite des freien Endes 21 aus, so dass sich zwischen Umfangsseite des Grundkörpers 24 und einer zur Grundkörperseite zeigenden Innenseite des Vorsprungs 30 ein freier Raum 31 ausbildet. In diesem freien Raum ist das keilförmige Gehäuseteil, wie in Figur 4 dargestellt, aufgenommen. Das Federelement 23 steht in Anlage mit dem Vorsprung 30 des Hebelarms 19. Die Bewegung des Vorsprungs 30 des Hebelarms 19 wird an dem keilförmigen Gehäuseteil geführt. Der Vorsprung 30 liegt in Anlage mit einer ersten Seite 32 des keilförmigen Gehäuseteils. Der Exzenternocken 14 liegt auf einer der ersten Seite 32 gegenüberliegenden zweiten Seite 33 des keilförmigen Gehäuseteils an. Das keilförmige Gehäuseteil bildet somit zwei Anlageflächen 32,33 mit jeweils einem Kontaktpunkt 34,35 oder einer Kontaktfläche für den Lagerträger 13 aus. Der Lagerträger 13 weist auf seiner der Schneckenwelle abgewandten Seite eine plane Oberfläche auf.

Figur 6 zeigt schematisch die Anordnung der Anlageflächen 32,33 nach der Montage des Getriebes 1, ohne externe Kräfte auf die Schneckenwelle. Die nicht dargestellte Schneckenwelle sitzt in y-Richtung oberhalb des schematisch dargestellten Schneckenrades 4. Die x-Achse erstreckt sich senkrecht zur y-Achse und senkrecht zur Rotationsachse 100 der Schneckenwelle. Der Ursprung des Koordinatensystems liegt im Mittelpunkt der durchsetzenden Öffnung 25 des Lagerträgers 13 bzw. im Mittelpunkt des Grundkörpers 24 des Lagerträgers 13 und somit auf der Rotationsachse 100. Die Anlageflächen 32,33 liegen in einer gemeinsamen Ebene in z-Richtung.

Der Kontaktpunkt 35 bzw. -bereich des Exzenternockens 14 an dem Getriebegehäuse weist ausgehend vom Mittelpunkt einen Winkelabstand α zur x-Achse auf. Die Anlagefläche 33 des Getriebegehäuses in diesem ersten Kontaktpunkt 35 (Tangente) erstreckt sich unter einem Winkel δ zur y-Achse und weist einen Abstand d₁ zur y-Achse auf. Der Kontaktpunkt 34 bzw. - bereich des Hebelarms 19 an dem Getriebegehäuse weist ausgehend vom Mittelpunkt einen Winkelabstand β zur x-Achse auf. Die Anlagefläche 32 des Getriebegehäuses in diesem zweiten Kontaktpunkt 34 (Tangente) erstreckt sich unter einem Winkel γ zu der Lotgeraden der Verbindungslinie zwischen Mittelpunkt und zweitem Kontaktpunkt 34 im zweiten Kontaktpunkt 34. Der Abstand zwischen Mittelpunkt und zweitem Kontaktpunkt 34 ist als d₂ definiert. Die Feder 23 weist eine Federkraft F₁ auf. Die Vorspanneinrichtung hat ein Spiel d₃.

Die Geometrie der Anlageflächen (Winkel und Abstände) und die Reibwerte der Kontaktpunkte und Anlagefläche können so gewählt werden, dass kein der Schnecke Abheben möglich ist (Nachsteller) (γ<0) oder dass Abheben erst mit sehr hohen Kräften möglich ist oder dass ein Abheben bereits mit kleinen Kräften möglich ist. Die Konfiguration kann mit kleinen Anpresskräften (im passiven Betrieb / Durchdrehmoment) radial in die Verzahnung arbeiten.

Die beiden Anlageflächen 32,33, die theoretisch auch punktförmig ausgebildet sein können, sind zueinander versetzt angeordnet und ermöglichen eine Kompensation der asymmetrischen Verzahnungskräfte und damit auch eine Geräuschreduktion.

Der Winkel δ kann verwendet werden um die Kraftbalance zwischen den beiden Drehrichtungen der Schneckenwelle einzustellen.

In einer vorteilhaften Ausführungsform betragen die Winkel α und δ 0°. Der Winkel β liegt bei etwa 35° und der Winkel γ bei 9°. Der Winkel γ muss relativ groß gewählt werden um Reibkräfte zu überwinden. Ohne Reibung liegt der Winkel γ in einem Bereich von 0,5° bis 2,5°, insbesondere zwischen 1° und 2°. Mit Reibung im zweiten Kontaktbereich 34 liegt der Winkel γ in einem Bereich zwischen 7° und 13°. In der vorteilhaften Ausführungsform ist der Reibkoeffizient bei etwa 0,1. Der Abstand d₁ ist etwa 16 mm und der Abstand d₂ etwa 22 mm. Die Federkraft beträgt bevorzugt 5N. Das Spiel d₃ in der Vorspanneinrichtung ist auf 0,2 mm eingestellt. Die restlichen Kontakte weisen kein Spiel auf. Die Radien der Kontaktpunkte 34,35 vom Mittelpunkt ausgehend betragen mindestens 7 mm.

Eine weitere Einstellmöglichkeit kann durch ein bewegliches Gehäuseteil vorgesehen sein. Der zwischen den beiden Kontaktpunkten befindliche Teil des Gehäuses, der insbesondere keilförmig ist, kann durch Ausweichen in y-Richtung ein Sperren der Schneckenwelle verhindern.

Es ist möglich die Anordnung der Kontaktpunkte so vorzunehmen, dass es hohe Kräfte braucht, bis sich der Lagerträger relativ zur Schneckenwelle bewegt. Um ein Durchdrehmoment möglichst niedrig zu halten, kann eine Anfederung im zweiten Kontaktpunkt 34 zwischen Vorsprung des Hebelarms und Gehäuse vorgesehen sein.

Der zuvor beschriebene Lagerträger weist eine besonders einfache Konstruktion auf und ist mit der Vorspanneinrichtung in einem einzigen Bauteil, bevorzugt einstückig ausgebildet. Durch die Nachsteller-ähnlichen Eigenschaften kann die Funktion des Lagerträgers über die Lebensdauer des Getriebes erfüllt werden. Ein Verschleiß im Getriebe kann zudem kompensiert werden.

## Patentansprüche

1. Elektromechanische Servolenkung mit einem elektrischen Servomotor (150) mit einer Motorwelle, der eine mit einem Schraubrad (4) kämmende Welle (2) antreibt, wobei die Welle (2) in einem Getriebegehäuse (8) angeordnet und in einer Lageranordnung (7) aufweisend ein Wälzlager (9) um eine Rotationsachse (100) drehbar gelagert ist, wobei eine Vorspanneinrichtung (18) umfasst ist, die ein bewegliches Lagerelement der Lageranordnung (7) federelastisch gegen das Getriebegehäuse (8) zum Einstellen des Spiels des Eingriffs zwischen Schraubrad (4) und Welle (2) vorspannt, **dadurch gekennzeichnet, dass** das Getriebegehäuse (8) einen Gehäuseabschnitt (16) mit einer ersten Anlagefläche (33) und einer zweiten Anlagefläche (32) aufweist, wobei die Lageranordnung (7) einen Lagerträger (13) für das Wälzlager (9) aufweist, der das bewegliche Lagerelement bildet und der einen sich von einem Grundkörper (24) des Lagerträgers (13) erstreckenden Hebelarm (19) mit einem freien Ende (21) aufweist, welches am Getriebegehäuse (8) an der zweiten Anlagefläche (32) in einem zweiten Kontaktbereich (34) anliegt, wobei der Lagerträger (13) an seinem Grundkörper (24) einen Exzenternocken (14) aufweist, der an der ersten Anlagefläche (33) am Gehäuse (8) in einem ersten Kontaktbereich (35) anliegt.

2. Elektromechanische Servolenkung nach Anspruch 1, **dadurch gekennzeichnet, dass** der die erste und zweite Anlagefläche (32,33) bildende Gehäuseabschnitt (16) des Getriebegehäuses (16) keilförmig mit ebenen Seiten (17) ausgebildet ist.

3. Elektromechanische Servolenkung nach Anspruch 1 oder 2, **dadurch gekennzeichnet, dass** der erste und zweite Kontaktbereich (34,35) in einer gemeinsamen Ebene senkrecht zur Rotationsachse (100) liegen.

4. Elektromechanische Servolenkung nach einem der vorhergehenden Ansprüche, **dadurch gekennzeichnet, dass** der Hebelarm (19) an seinem freien Ende (21) einen in Längsrichtung erstreckenden Vorsprung (30) aufweist, der sich am Getriebegehäuse (8) federelastisch abstützt und der an der zweiten Anlagefläche (32) anliegt.

5. Elektromechanische Servolenkung nach Anspruch 4, **dadurch gekennzeichnet, dass** zwischen dem Vorsprung (30) und dem Grundkörper (24) des Lagerträgers (13) ein freier Raum (31) ausgebildet ist, in dem der die erste und zweite Anlagefläche (32,33) bildende Gehäuseabschnitt (16) des Getriebegehäuses (8) aufgenommen ist.

6. Elektromechanische Servolenkung nach einem der vorhergehenden Ansprüche, **dadurch gekennzeichnet, dass** das Wälzlager (9) von dem Grundkörper (24) des Lagerträgers (13) konzentrisch umgeben ist und dass der Lagerträger (13) in einer zentralen Öffnung (25) des Grundkörpers (24) einen Sitz für das Wälzlager (9) aufweist, der durch einen Absatz (26) in der Öffnung (25) ausgebildet ist.

7. Elektromechanische Servolenkung nach einem der vorhergehenden Ansprüche, **dadurch gekennzeichnet, dass** auf das freie Ende (21) des Hebelarms (19) ein im Getriebegehäuse (8) gehaltenes Federelement (23) zur federelastischen Vorspannung der Schnecke (2) im Getriebegehäuse (8) drückt.

8. Elektromechanische Servolenkung nach einem der vorhergehenden Ansprüche, **dadurch gekennzeichnet, dass** der Exzenternocken (14) sich über einen Kreissektor in einem Bereich zwischen 10° und 100° zur Rotationsachse (100) der Schneckenwelle (2) erstreckt.

9. Elektromechanische Servolenkung nach einem der vorhergehenden Ansprüche, **dadurch gekennzeichnet, dass** der Exzenternocken (14) eine bauchige Erhebung (15) aufweist, die sich in Umfangsrichtung asymmetrisch erstreckt und in Längsrichtung gleichbleibend ist und deren Radius der Krümmung im Querschnitt kleiner als der Radius des Lagersitzes ist.

10. Elektromechanische Servolenkung nach einem der vorhergehenden Ansprüche, **dadurch gekennzeichnet, dass** der Exzenternocken (14) derart ausgeformt ist, dass bei Bewegung eines Lageraußenrings (12) des Wälzlagers (9) um die Rotationsachse (100) sich zur Einstellung des Spiels des Eingriffs zwischen Schraubrad (4) und Welle (2) der Lageraußenring (12) von dem Gehäuseabschnitt (16) weg oder zu diesem hin bewegt.

11. Elektromechanische Servolenkung nach einem der vorhergehenden Ansprüche, **dadurch gekennzeichnet, dass** die erste und/oder zweite Anlagefläche (32,33) des Getriebegehäuses (8) eine höhere Steifigkeit als der Lagerträger (13) aufweist.

12. Elektromechanische Servolenkung nach einem der vorhergehenden Ansprüche, **dadurch gekennzeichnet, dass** der Winkelabstand zwischen dem ersten Kontaktbereich (35) und dem zweiten Kontaktbereich (34) in Umfangsrichtung zur Rotationsachse (100) zwischen 20° und 50°, insbesondere zwischen 30° und 40°, beträgt.

13. Elektromechanische Servolenkung nach einem der vorhergehenden Ansprüche, **dadurch gekennzeichnet, dass** das Schraubrad ein Schneckenrad (4) und die Welle eine Schneckenwelle (2) ist.

## Claims

1. An electromechanical power steering system having an electric servomotor (150) which has a motor shaft and drives a shaft (2) that meshes with a helical gear (4), wherein the shaft (2) is disposed in a gearbox housing (8) and mounted in a bearing assembly (7) having a roller bearing (9) so as to be rotatable about a rotation axis (100), comprising a pretensioning installation (18) which for adjusting the play in the engagement between the helical gear (4) and the shaft (2) resiliently pretensions a movable bearing element of the bearing assembly (7) in relation to the gearbox housing (8), **characterized in that** the gearbox housing (8) has a housing portion (16) having a first contact face (33) and a second contact face (32), wherein the bearing assembly (7) for the roller bearing (9) has a bearing support (13) that forms the movable bearing element and has a lever arm (19) having a free end (21) which extends from a main body (24) of the bearing support (13) and on the gearbox housing (8) lies against the second contact face (32) in a second contact region (34), wherein the bearing support (13) on the main body (24) thereof has an eccentric cam (14) which on the housing (8) lies against the first contact face (33) in a first contact region (35).

2. The electromechanical power steering system as claimed in claim 1, **characterized in that** the housing portion (16) of the gearbox housing (16) that forms the first and the second contact face (32, 33) is configured in the shape of a wedge with planar sides (17).

3. The electromechanical power steering system as claimed in claim 1 or 2, **characterized in that** the first and the second contact region (34, 35) lie in a common plane perpendicular to the rotation axis (100).

4. The electromechanical power steering system as claimed in one of the preceding claims, **characterized in that** the lever arm (19) on the free end (21) thereof has a protrusion (30) which extends in the longitudinal direction, is resiliently supported on the gearbox housing (8) and lies against the second contact face (32).

5. The electromechanical power steering system as claimed in claim 4, **characterized in that** a void (31) is configured between the protrusion (30) and the main body (24) of the bearing support (13), the housing portion (16) of the gearbox housing (8) that forms the first and the second contact face (32, 33) being received in said void (31).

6. The electromechanical power steering system as claimed in one of the preceding claims, **characterized in that** the roller bearing (9) is concentrically surrounded by the main body (24) of the bearing support (13), and **in that** the bearing support (13) in a central opening (25) of the main body (24) has a seat for the roller bearing (9) that is configured by a shoulder (26) in the opening (25).

7. The electromechanical power steering system as claimed in one of the preceding claims, **characterized in that** a spring element (23), which is held in the gearbox housing (8), for resiliently pretensioning the worm (2) in the gearbox housing (8) presses on the free end (21) of the lever arm (19).

8. The electromechanical power steering system as claimed in one of the preceding claims, **characterized in that** the eccentric cam (14) extends across a sector in a range between 10° and 100° in relation to the rotation axis (100) of the worm shaft (2).

9. The electromechanical power steering system as claimed in one of the preceding claims, **characterized in that** the eccentric cam (14) has a bulging elevation (15) which extends asymmetrically in the circumferential direction and is consistent in the longitudinal direction, the curvature radius of said elevation (15) in the cross section being smaller than the radius of the bearing seat.

10. The electromechanical power steering system as claimed in one of the preceding claims, **characterized in that** the eccentric cam (14) is shaped in such a manner that, in a movement of a bearing outer race (12) of the roller bearing (9) about the rotation axis (100), the bearing outer race (12) for adjusting the play in the engagement between the helical gear (4) and the shaft (2) moves away from the housing portion (16) or toward the latter.

11. The electromechanical power steering system as claimed in one of the preceding claims, **characterized in that** the first and/or the second contact face (32, 33) of the gearbox housing (8) have/has a higher stiffness than the bearing support (13).

12. The electromechanical power steering system as claimed in one of the preceding claims, **characterized in that** the angular spacing between the first contact region (35) and the second contact region (34) in the circumferential direction to the rotation axis (100) is between 20° and 50°, in particular between 30° and 40°.

13. The electromechanical power steering system as claimed in one of the preceding claims, **characterized in that** the helical gear is a worm gear (4) and the shaft is a worm shaft (2).

## Revendications

1. Direction assistée électromécanique comprenant un servomoteur électrique (150) comprenant un arbre de moteur qui entraîne un arbre (2) s'engrenant avec une roue à dents hélicoïdes (4), l'arbre (2) étant disposé dans un carter de transmission (8) et étant monté dans un agencement de palier (7) présentant un palier à roulement (9) de manière rotative autour d'un axe de rotation (100), un dispositif de précontrainte (18) étant prévu, lequel précontraint un élément de palier mobile de l'agencement de palier (7) de manière élastique contre le carter de transmission (8) pour le réglage du jeu de l'engrènement entre la roue à dents hélicoïdes (4) et l'arbre (2), **caractérisée en ce que** le carter de transmission (8) présente une partie de carter (16) comprenant une première surface d'appui (33) et une deuxième surface d'appui (32), l'agencement de palier (7) présentant un support de palier (13) pour le palier à roulement (9), lequel support de palier forme l'élément de palier mobile et lequel présente un bras de levier (19) s'étendant à partir d'un corps de base (24) du support de palier (13) et comprenant une première extrémité libre (21), laquelle s'appuie au niveau du carter de transmission (8) contre la deuxième surface d'appui (32) dans une deuxième région de contact (34), le support de palier (13) présentant au niveau de son corps de base (24) une came excentrique (14) qui s'appuie contre la première surface d'appui (33) au niveau du carter (8) dans une première région de contact (35).

2. Direction assistée électromécanique selon la revendication 1, **caractérisée en ce que** la partie de carter (16), formant la première et la deuxième surface d'appui (32, 33), du carter de transmission (16) est réalisée de manière cunéiforme avec des côtés plans (17).

3. Direction assistée électromécanique selon la revendication 1 ou 2, **caractérisée en ce que** la première et la deuxième région de contact (34, 35) se situent dans un plan commun perpendiculaire à l'axe de rotation (100).

4. Direction assistée électromécanique selon l'une des revendications précédentes, **caractérisée en ce que** le bras de levier (19) présente à son extrémité libre (21) une saillie (30) s'étendant dans la direction longitudinale, laquelle saillie est supportée de manière élastique sur le carter de transmission (8) et laquelle s'appuie contre la deuxième surface d'appui (32).

5. Direction assistée électromécanique selon la revendication 4, **caractérisée en ce qu'**un espace libre (31) est formé entre la saillie (30) et le corps de base (24) du support de palier (13), espace libre dans lequel est reçue la partie de carter (16), formant la première et la deuxième surface d'appui (32, 33), du carter de transmission (8).

6. Direction assistée électromécanique selon l'une des revendications précédentes, **caractérisée en ce que** le palier à roulement (9) est entouré de manière concentrique par le corps de base (24) du support de palier (13) et **en ce que** le support de palier (13) présente, dans une ouverture centrale (25) du corps de base (24), un siège pour le palier à roulement (9), lequel siège est formé par un épaulement (26) dans l'ouverture (25) .

7. Direction assistée électromécanique selon l'une des revendications précédentes, **caractérisée en ce qu'**un élément ressort (23), qui est retenu dans le carter de transmission (8), pour la précontrainte élastique de la vis sans fin (2) dans le carter de transmission (8) presse sur l'extrémité libre (21) du bras de levier (19).

8. Direction assistée électromécanique selon l'une des revendications précédentes, **caractérisée en ce que** la came excentrique (14) s'étend sur un secteur de cercle dans une plage entre 10° et 100° par rapport à l'axe de rotation (100) de l'arbre de vis sans fin (2).

9. Direction assistée électromécanique selon l'une des revendications précédentes, **caractérisée en ce que** la came excentrique (14) présente un rehaussement bombé (15) qui s'étend de manière asymétrique dans la direction circonférentielle et est constant dans la direction longitudinale et dont le rayon de courbure en section transversale est inférieur au rayon du siège de palier.

10. Direction assistée électromécanique selon l'une des revendications précédentes, **caractérisée en ce que** la came excentrique (14) est formée de telle sorte que, lors d'un déplacement d'une bague extérieure de palier (12) du palier à roulement (9) autour de l'axe de rotation (100), la bague extérieure de palier (12) se déplace à l'écart de la partie de carter (16) ou vers celle-ci pour le réglage du jeu de l'engrènement entre la roue à dents hélicoïdes (4) et l'arbre (2).

11. Direction assistée électromécanique selon l'une des revendications précédentes, **caractérisée en ce que** la première et/ou la deuxième surface d'appui (32, 33) du carter de transmission (8) présente(nt) une plus grande rigidité que le support de palier (13).

12. Direction assistée électromécanique selon l'une des revendications précédentes, **caractérisée en ce que** la distance angulaire entre la première région de contact (35) et la deuxième région de contact (34) dans la direction circonférentielle par rapport à l'axe de rotation (100) vaut entre 20° et 50°, en particulier entre 30° et 40°.

13. Direction assistée électromécanique selon l'une des revendications précédentes, **caractérisée en ce que** la roue à dents hélicoïdes est une roue à vis sans fin (4) et l'arbre est un arbre de vis sans fin (2).
